Europäisches Patentamt

European Patent Office

Office européen des brevets

(19)

(11) Numéro de publication: **0 425 011 A2**

# (12) DEMANDE DE BREVET EUROPEEN

(21) Numéro de dépôt: 90202720.0

(22) Date de dépôt: 12.10.90

(51) Int. Cl.⁵: **B29C 33/00**, B29C 67/18, B29C 33/08

(30) Priorité: 24.10.89 IT 6791489

(43) Date de publication de la demande:
02.05.91 Bulletin 91/18

(84) Etats contractants désignés:
AT BE CH DE DK ES FR GB GR LI LU NL SE

(71) Demandeur: LYS FUSION S.P.A.
Via Beauviermoz 22
I-11020 Hône (Aoste)(IT)

(72) Inventeur: Parisi, Nicola, Dr. Ing.
Via Madama Cristina 45
I-10125 Torino(IT)

(74) Mandataire: Patrito, Pier Franco, Dr. Ing.
Cabinet PATRITO BREVETTI Via Don Minzoni
14
I-10121 Torino(IT)

(54) Procédé et moule pour le comoulage de matières plastiques avec des pièces insérées susceptibles d'être détériorées.

(57) L'invention concerne l'application d'un procédé de moulage dans lequel la matière plastique à mouler est introduite dans la cavité (15) d'une moule (11-14), est soumise à une pression modérée, et lui est appliqué un rechauffement électrique inductif ou capacitif en des conditions telles que la chaleur nécessaire pour faire fondre et/ou polimériser la matière plastique est engendrée essentiellement dans la masse de matière plastique contenue dans la moule, et seulement en mesure marginale dans la moule elle-même, caractérisée en ce que ce procédé est utilisé pour le comoulage d'au moins une pièce insérée (C) susceptible d'être détériorée, par l'emploi d'une moule (11-14) comportant au moins certaines parties (12,14) formées par un matériau élastomère, destinées à serrer la pièce insérée (C). La pression de serrage réduite, autorisée par ce procédé de moulage, et la distribution de cette pression, assurée par le matériau élastomère, préviennent tout endommagement de la pièce insérée dû à des sollicitations mécaniques, tandis que la durée réduite du rechauffement prévient l'endommagement de la pièce insérée par une sollicitation thermique excessive. L'invention concerne aussi la moule particulière (11-14), caractérisée en ce qu'au moins les parties (12,14) destinées à serrer la pièce insérée (C) sont de matériau élastomère.

FIG. 2

## PROCEDE ET MOULE POUR LE COMOULAGE DE MATIERES PLASTIQUES AVEC DES PIECES INSEREES SUSCEPTIBLES D'ETRE DETERIOREES

La présente invention a pour objet l'application d'un procédé particulier de moulage au comoulage de matières plastiques (souples, semi-rigides ou rigides) avec des pièces insérées susceptibles d'être détériorées, en raison de leur propre caractéristiques, telles que la fragilité ou la sensibilité à la chaleur, ou bien par d'autres causes. L'invention concerne aussi une moule particulièrement conformée pour cette application spécifique dudit procédé.

Dans la technique habituelle, le comoulage d'une matière plastique avec une pièce insérée, qui dans la plupart des cas doit être incorporée dans la masse de matière plastique pour une partie, tandis que pour une autre partie elle doit faire saillie de la masse de matière plastique, comporte l'emploi d'une moule métallique divisée en au moins deux parties, laquelle présente une cavité de moulage qui correspond à la forme de la masse de matière plastique à mouler et serre entre ses parties la pièce insérée en correspondance de la région dans laquelle cette dernière fait saillie de la masse de matière plastique. La pression de serrage doit être suffisante pour prévenir la sortie de la matière plastique, en correspondance des interfaces entre la moule et la pièce insérée, pendant la période dans laquelle la matière plastique est à l'état fondu. En particulier, si le moulage a lieu par injection, la pression de serrage doit être très énergique en considération de la valeur élevée de la pression d'injection. Il est très difficile d'effectuer un comoulage en incorporant des pièces d'un matériau fragile, parce que la pression exercée sur elles par les parties de la moule métallique pour réaliser l'étanchéité a tendance à en causer la rupture.

Pour cette raison, lorsqu'un élément en matériau fragile doit être pourvu, par exemple, d'un cadre en matière plastique, celui-ci doit être fabriqué séparément et puis appliqué, le cas échéant par collage, sur le bord périphérique de l'élément, par un ensemble d'opérations relativement coûteux et d'organisation difficile. Des exemples de ce cas sont présentés par certaines glaces pour fenêtre ou pare-brise d'automobiles, par les hublots d'embarcations ou d'avions, par les diaphragmes céramiques avec cadre de support pour des écouteurs ou des sirènes électroniques, et ainsi de suite. Dans ces cas, la difficulté de produire un article par comoulage devient insurmontable si la pièce à insérer n'est pas plate, parce qu'il est impossible de faire correspondre exactement les conformations des parties de la moule qui doivent serrer la pièce insérée avec les conformations des parties de la pièce insérée qui doivent être serrées.

En pratique, une difficulté insurmontable semblable est rencontrée, dans les cas où la pièce insérée, par sa nature, ne peut pas supporter un rechauffement long sans être détériorée, même si le moulage est effectué par des résines thermodurcissables, malgré que dans ce cas les pressions appliquées sont bien plus modérées, et cela à cause de la longue période de chauffage nécessaire pour porter la moule à la température de réticulation, pour effectuer la réticulation de la résine et ensuite pour laisser refroidir la moule. La même difficulté insurmontable se rencontre si la pièce insérée a un coefficient de dilatation thermique tel à ne pas permettre de maintenir l'étanchéité pendant l'opération.

Le but de la présente invention est d'étendre auxdits cas et autres les avantages économiques et d'organisation des procédés de formage par comoulage. Le principe de l'invention est d'utiliser à cet effet les caractéristiques particulières du procédé de moulage décrit dans le Brevet Italien No. 1.195.171 de la même titulaire.

Ledit procédé est caractérisé en ce que la matière plastique à mouler est introduite dans la cavité d'une moule, est soumise à une pression modérée, et lui est appliqué un rechauffement électrique inductif ou capacitif en des conditions telles que la chaleur nécessaire pour faire fondre et/ou polimériser la matière plastique est engendrée essentiellement dans la masse de matière plastique contenue dans la moule, et seulement en mesure marginale dans la moule elle-même. A cet effet on peut employer des fréquences de 1 à 50 kHz si les moules sont métalliques, et des fréquences jusqu'à 100 MHz et au-delà, si les moules ne sont pas métalliques ou bien elles sont métalliques seulement en partie. Du fait que la chaleur est engendrée pour la plupart dans la masse de matière plastique elle-même, la durée totale du rechauffement est très réduite, tandis qu'aucune forte pression n'est appliquée, parce qu'on n'a pas à faire une injection sous pression élevée.

Du fait que ni des pressions élevées ni des rechauffements forts et prolongés de la moule ne sont en jeu, en employant ce procédé il est possible, suivant la présente invention, de réaliser les moules, ou tout au moins les parties des moules qui sont destinées à venir en contact avec la pièce insérée, par un matériau élastomère de caractéristiques appropriées, lequel présente une dureté limitée et donc est capable d'établir par rapport à la pièce insérée, tout sans lui appliquer des sollicitations élevées, une étanchéité suffisante pour éviter la sortie de la matière plastique fondue, laquelle de son côté n'est pas soumise à une pression élevée. Une telle possibilité ne se rencontrerait pas dans l'emploi des procédés habituels de moulage par injection, du fait de la pression élevée nécessaire pour l'injection, pression a laquelle des matériaux élastomères ne seraient pas capables de résister, ni dans l'emploi des procédés habituels de moulage de matériaux thermodurcissables, qui comportent des périodes de rechauffement longues, susceptibles de détériorer, par la répétition des opérations, les matériaux élastomères.

Devient ainsi possible d'effectuer le comoulage soit d'éléments fragiles, grâce à la sollicitation réduite qui lui est appliquée par les parties de moule relativement souples, soit d'éléments susceptibles d'être endommagés par un rechauffement prolongé, grâce à la période de rechauffement relativement réduite.

Le but de l'invention est donc atteint par l'application d'un procé dé de moulage dans lequel la matière plastique à mouler est introduite dans la cavité d'une moule, est soumise à une pression modérée, et lui est appliqué un rechauffement électrique inductif ou capacitif en des conditions telles que la chaleur nécessaire pour faire fondre et/ou polimériser la matière plastique est engendrée essentiellement dans la masse de matière plastique contenue dans la moule, et seulement en mesure marginale dans la moule elle-même, caractérisée en ce que ce procédé est utilisé pour le comoulage d'au moins une pièce insérée susceptible d'être détériorée, par l'emploi d'une moule comportant au moins certaines parties formées par un matériau élastomère, destinées à serrer la pièce insérée.

Dans un mode de réalisation possible de l'invention on fait usage d'une moule entièrement constituée par du matériau élastomère. Dans un autre mode de réalisation possible on fait usage d'une moule constituée au moins en partie par du matériau rigide, éventuellement métallique, mais dont les parties destinées à serrer la pièce insérée sont constituées par des tasseaux de matériau élastomère, appliqués au matériau rigide de la moule.

Les moules ayant ces caractéristiques sont objets de l'invention elles-aussi.

L'invention sera ultérieurement éclaircie en faisant référence à des exemples de réalisation, non limitatifs, schématiquement représentés dans le dessin annexé, dans lequel:

Fig. 1 montre une partie d'une moule destinée au comoulage d'un cadre sur une feuille de verre courbée, telle qu'elle devrait être réalisée suivant la technique habituelle;

Figs. 2 et 3 montrent les structures de deux moules destinées à la même opération, réalisées en application de deux modes différents de réalisation de l'invention.

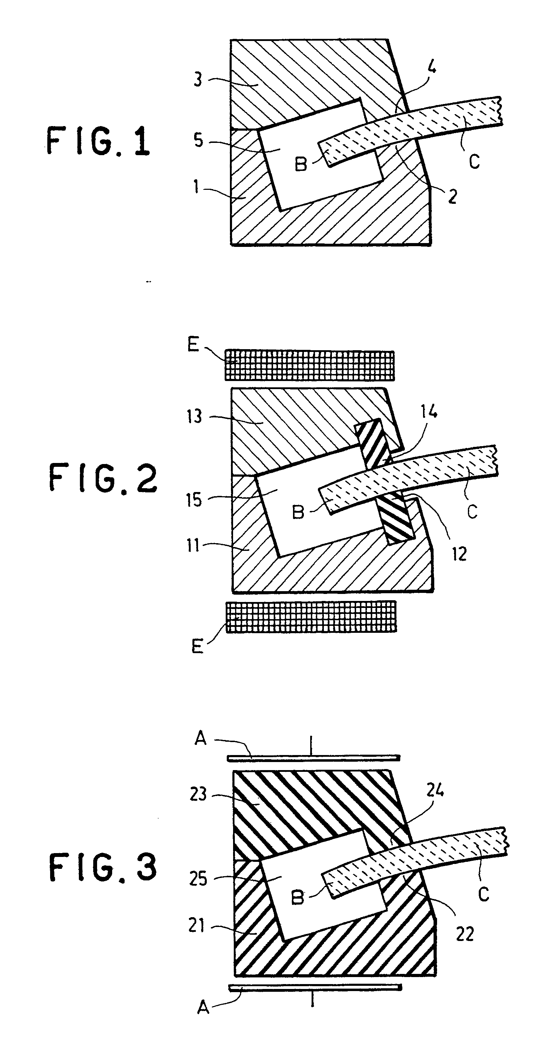

Faisant référence à la figure 1, les numéros 1 et 3 désignent les deux parties d'une moule métallique réalisée suivant la technique habituelle, lesquelles délimitent une cavité de moulage 5. Les portions 2 et respectivement 4 des deux parties de moule 1 et 3 sont conformées à l'effet de serrer une feuille de verre C de sorte à faire étanchéité par rapport à cette dernière, et d'une façon telle que le bord périphérique B de la feuille C fait saillie dans la cavité de moulage 5, de sorte à être incorporé dans une masse de matière plastique lorsque celle-ci sera injectée dans la cavité de moulage 5. La pression que les portions 2 et 4 des parties de moule doivent exercer sur les régions correspondantes de la feuille C sont élevées à l'effet d'établir une étanchéité suffisante pour prévenir la sortie de la matière plastique injectée à l'état liquide et sous une forte pression dans la cavité de moulage 5. Du fait qu'il n'est pas possible de faire correspondre exactement la forme des portions de moule 2 et 4 aux régions correspondantes de la feuille C, pendant le serrage s'avèrent des concentrations de sollicitation qui, en un considérable nombre de cas, portent à la rupture de la feuille de verre C.

De ce fait, cette technique théoriquement possible n'est pas utilisée en pratique. Au contraire, on doit mouler le cadre séparément de la feuille de verre C, et ensuite insérer le cadre sur le bord périphérique de la feuille. Si, comme souvent s'avère, on demande une solidarité stable du cadre par rapport au bord de la feuille, on doit faire recours à un collage. L'ensemble de ces opérations est compliqué, coûteux et difficile à organiser industriellement, et le résultat n'est pas entièrement satisfaisant.

En application de l'invention, comme le montre la figure 2, la moule, laquelle dans ce cas est métallique comme d'habitude, est constituée par deux parties 11 et 13 qui délimitent une cavité de moulage 15, mais qui sont conformées de sorte à ne pas arriver jusqu'au contact avec la feuille de verre C. Avec cette dernière arrivent au contact, au contraire, deux tasseaux 12 et 14 de matériau élastomère, appliqués aux parties métalliques de moule 11 et 13 dans les régions où l'on doit établir l'étanchéité par rapport à la feuille de verre C. Grâce à la souplesse du matériau élastomère, aucune concentration appréciable de sol licitations ne se vérifie au contact avec la feuille de verre C, et d'autre côté la pression nécessaire pour faire étanchéité est très modeste en vue de la pression réduite qui sera appliquée à la matière plastique contenue dans la cavité de moulage 15, du fait qu'on a prévu d'effectuer le moulage par un procédé suivant le Brevet Italien No. 1.195.171. De cette façon, toute appréciable probabilité de rupture de la feuille de verre C est prévenue.

On doit remarquer que dans une moule suivant la figure 2 on ne pourrait pas effectuer une injection de matière plastique sous pression élevée suivant la technique habituelle, parce que les tasseaux 12 et 14 de matériau élastomère ne seraient pas en gré de résister à cette pression. D'autre côté, dans cette moule on ne pourrait même pas effectuer en des conditions industrielles un moulage de matières thermodurcissables suivant la technique habituelle, parce que les cycles répétés de rechauffement intense et prolongé, auxquels seraient soumis la moule et donc aussi les tasseaux de matériau élastomère, donneraient lieu rapidement à l'endommagement des tasseaux. C'est donc la combinaison spécifique des caractéristiques structurelles de la moule et des caractéristiques opératives du procédé de moulage adopté, à savoir l'application du procédé indiqué par l'emploi de la moule décrite, qui rend possible la mise en oeuvre de l'invention.

Dans un autre mode d'application de l'invention, comme le montre la figure 3, la moule est constituée par deux parties 21 et 23, qui délimitent une cavité de moulage 25, et qui sont conformées substantiellement comme le seraient les parties d'une moule métallique habituelle suivant la figure 1, de sorte qu'elles comportent des portions 22 et 24 destinées à serrer les régions correspondantes d'une feuille de verre C, mais les deux parties 21 et 23 de la moule, et donc aussi les portions 22 et 24, sont constituées par un matériau élastomère. Aussi dans ce cas, on évite toute sollicitation intense et concentrée sur la feuille de verre, ainsi prévenant toute probabilité de sa rupture.

Comme on le comprend, les considérations faites par rapport à la fi gure 2, au sujet de l'impossibilité d'utiliser la moule pour les procédés habituels de moulage, s'appliquent à plus forte raison au cas de la figure 3.

Le mode de réalisation comportant une moule métallique avec des tasseaux de serrage de matériau élastomère, suivant la figure 2, est particulièrement approprié pour un procédé dans lequel la chaleur est produite par un enroulement électrique E, disposé de façon appropriée par rapport à la moule et alimenté par un courant électrique haute fréquence, compris de préférence entre 1 et 50 kHz.

De son côté, le mode de réalisation comportant une moule entièrement constituée par un matériau élastomère, suivant la figure 3, est particulièrement approprié pour un procédé dans lequel la chaleur est produite par des armatures de condensateur A, disposées de façon appropriée par rapport à la moule et alimentées par un courant électrique haute fréquence jusqu'à 100 MHz et aussi au-delà.

On doit comprendre, toutefois, qu'il est aussi possible d'employer des moules constituées par un matériau rigide non métallique incorporant des tasseaux de matériau élastomère destinés à serrer la pièce insérée, et que la moule peut être constituée par des parties métalliques et non métalliques, rigides ou éventuellement élastomères, combinées de toute façon, à condition qu'au moins les portions de la moule qui sont destinées à serrer la pièce insérée soient constituées par un matérial élastomère. Il est aussi évident, d'autre part, que les pièces insérées peuvent être plus qu'une.

Comme matériau élastomère on peut employer, dans le cadre de l'invention, tout matériau élastomère capable de résister aux pressions modestes et aux rechauffements courts comportés par le procédé de moulage adopté. On peut ainsi employer des caoutchoucs naturels ou synthétiques, des caoutchoucs polyacryliques et siliconiques, des thioplastes, du polyéthylène chloro-sulfoné, des copolymères d'éthylène et de propylène, du polyvinylchlorure plastifié et des matériaux similaires. Le degré de dureté de ces matériaux sera choisi en un champ compris entre 30 et 95 degrés IRHD suivant les normes ISO, en fonction des exigences particulières du travail prévu.

La réalisation d'un cadre périphérique sur une feuille de verre, qu'on a décrit, n'est qu'un des exemples possibles d'application de l'invention. On a déjà dit que l'invention se prête pour la réalisation de cadres de garniture pour des diaphragmes céramiques d'écouteurs ou d'autres générateurs de sons, mais le domaine général d'application de l'invention s'étend à tout cas dans lequel au moins une pièce insérée doit être comoulé dans une masse de matière plastique conformée et disposée de toute façon, et qu'on a raison de craindre que cette pièce insérée pourrait être endommagée par la pression de serrage de la moule et/ou par une période de rechauffement de longueur considérable.

**Revendications**

1 . Application d'un procédé de moulage dans lequel la matière plastique à mouler est introduite dans la cavité (15; 25) d'une moule (11-14; 21-24), est soumise à une pression modérée, et lui est appliqué un rechauffement électrique inductif ou capacitif en des conditions telles que la chaleur nécessaire pour faire fondre et/ou polimériser la matière plastique est engendrée essentiellement dans la masse de matière plastique contenue dans la moule, et seulement en mesure marginale dans la moule elle-même, caractérisée en ce que ce procédé est utilisé pour le comoulage d'au moins une pièce insérée (C) susceptible d'être détériorée, par l'emploi d'une moule (11-14; 21-24) comportant au moins certaines parties (12,14; 22,24) formées par un matériau élastomère, destinées à serrer la pièce insérée (C).

2 . Procédé suivant la revendication 1, caractérisé en ce qu'on fait usage d'une moule (11,13) rigide, métallique ou non métallique, à laquelle sont appliquées des parties (12,14) en matériau élastomère destinées à serrer la pièce insérée (C).

3 . Procédé suivant la revendication 1, caractérisé en ce qu'on fait usage d'une moule (21-24)-constituée entièrement ou presqu'entièrement par du matériau élastomère.

4 . Moule (11-14; 21-24) pour le comoulage d'au moins une matière plastique avec au moins une pièce insérée (C) susceptible d'être détériorée, caractérisée en ce qu'au moins ses parties (12,14; 22,24) destinées à serrer la pièce insérée (C) sont constituées par du matériau élastomère.

5 . Moule suivant la revendication 4, caractérisée en ce qu'elle comporte des parties (11,13) rigides, métalliques ou non métalliques, auxquelles sont appliqués des tasseaux (12,14) en matériau élastomère destinés à serrer la pièce insérée (C).

6 . Moule suivant la revendication 4, caractérise en ce que cette moule (21-24) est constituée entièrement ou pour la plus grand partie par un matériau élastomère.

FIG. 1

FIG. 2

FIG. 3